# EUROPÄISCHE PATENTSCHRIFT

(11) **EP 3 861 536 B1**
(45) Veröffentlichungstag und Bekanntmachung des Hinweises auf die Patenterteilung: **14.01.2026**
(21) Anmeldenummer: 19779467.0
(22) Anmeldetag: 27.09.2019
(51) Int. Cl.: G07C 9/00

(54) **ZUGANGSSYSTEM FÜR EIN FAHRZEUG, VERFAHREN FÜR EIN ZUGANGSSYSTEM, COMPUTERPROGRAMMPRODUKT UND COMPUTERLESBARES MEDIUM**
ACCESS SYSTEM FOR A VEHICLE, METHOD FOR AN ACCESS SYSTEM, COMPUTER PROGRAM PRODUCT, AND COMPUTER-READABLE MEDIUM
SYSTÈME D'ACCÈS À UN VÉHICULE, PROCÉDÉ RELATIF À UN SYSTÈME D'ACCÈS, PRODUIT-PROGRAMME INFORMATIQUE ET SUPPORT LISIBLE PAR ORDINATEUR

(30) Priorität: 02.10.2018 DE 102018124354
(43) Veröffentlichungstag der Anmeldung: 11.08.2021
(73) Patentinhaber: HELLA GmbH & Co. KGaA, 59552 Lippstadt (DE)
(72) Erfinder: MÜLLER, Bernhard, 22529 Hamburg (DE)
(86) Internationale Anmeldenummer: PCT/EP2019/076178
(87) Internationale Veröffentlichungsnummer: WO 2020/069996

(56) Entgegenhaltungen:
- EP-A1- 3 335 942
- EP-A2- 2 806 406
- DE-A1- 10 105 060
- DE-A1- 102015 109 468
- DE-A1- 102017 205 162
- DE-C1- 19 850 176
- US-A1- 2018 232 971

## Beschreibung

Die vorliegende Erfindung bezieht sich auf ein Zugangssystem für ein Fahrzeug, ein Verfahren für ein Zugangssystem, ein Computerprogrammprodukt und ein computerlesbares Medium.

Derartige Zugangssysteme für Fahrzeuge, Verfahren, Computerprogrammprodukte und computerlesbare Medien sind aus dem Stand der Technik in zahlreichen Ausführungsvarianten bereits bekannt.

Darüber hinaus ist beispielsweise aus der US 2016/0140539 A1 ein Verfahren zur Abwehr von Relais-Attacken bekannt, bei dem ein Bewegungsablauf eines mobilen Geräts mittels zweier Bewegungssensoren erfasst und ausgewertet wird. Zum einen wird der Bewegungsablauf des mobilen Geräts mittels des mobilen Geräts selbst und zum anderen durch einen von dem mobilen Gerät separaten Bewegungssensor ermittelt. Sofern der von dem mobilen Gerät und dem separaten Bewegungssensor erfasste Bewegungsablauf des mobilen Geräts im Wesentlichen übereinstimmt, wird gefolgert, dass keine Relais-Attacke vorliegt. Das aus der US 2016/0140539 A1 bekannte Verfahren soll bei Bezahlsystemen oder dergleichen Anwendung finden. Der Kunde eines derartigen Bezahlsystems wird aufgefordert eine bestimmte Bewegung mit dem mobilen Gerät auszuführen, die dann auf die obige Weise mittels der beiden Bewegungssensoren erfasst und ausgewertet wird.

Ferner ist aus der DE 101 05 060 A1 ein Zugangskontrollsystem bekannt, umfassend ein Steuergerät sowie einen mit dem Steuergerät kommunizierenden, einen ersten Bewegungssensor aufweisenden Transponder, wobei das Steuergerät mit einem weiteren, die Bewegung einer den Transponder mit sich führenden Person detektierenden Bewegungssensor verbunden ist, und wobei die Kommunikation zwischen dem Transponder und dem Steuergerät bezüglich einer Zugangsberechtigung der Person nur freigegeben wird, wenn ein Vergleich der von den beiden Bewegungssensoren gelieferten Bewegungsmuster im Steuergerät eine Übereinstimmung in wesentlichen Merkmalen ergibt.

Etwas vergleichbares ist auch aus der EP 3 335 942 A1, DE 10 2015 109 468 A1 und der EP 2 806 406 A2 bekannt.

Darüber hinaus ist aus der DE 198 50 176 C1 eine Diebstahlschutzeinrichtung für ein Kraftfahrzeug bekannt, bei der auf einem tragbaren Codegeber eine physikalische Größe gemessen und deren Wert zusammen mit einer Codeinformation zu einer Steuereinheit im Kraftfahrzeug übertragen wird. Im Kraftfahrzeug wird die gleiche physikalische Größe gemessen. Wenn sowohl die Werte der gemessenen Größen als auch die in dem Codesignal enthaltene Codeinformation mit einer fahrzeugeigenen Sollcodeinformation übereinstimmen, werden die Sicherheitseinrichtungen im Kraftfahrzeug freigegeben.

Schließlich offenbart die US 2018 232 971 A1 ein Zugangskontrollsystem zu einem Fahrzeug, das ebenfalls eine fahrzeugbasierte Identifikationseinheit und eine mobile Zugangsvorrichtung umfasst, wobei beide jeweils einen Umweltsensor zur Detektion von Daten aus der Umwelt aufweisen. Die Identifikationseinheit überprüft dann, ob die mittels der mobilen Zugangsvorrichtung detektierten Daten aus der Umwelt mit denen übereinstimmen, die mittels fahrzeugbasierter Sensoren detektiert worden sind.

Hier setzt die vorliegende Erfindung an.

Der vorliegenden Erfindung liegt die Aufgabe zugrunde, die Sicherheit bei dem Zugang zu einem Fahrzeug zu verbessern.

Diese Aufgabe wird durch ein Zugangssystem für ein Fahrzeug mit den Merkmalen des Anspruchs 1, ein Verfahren für ein Zugangssystem eines Fahrzeugs mit den Merkmalen des Anspruchs 5, ein Computerprogrammprodukt mit den Merkmalen des Anspruchs 13 und ein computerlesbares Medium mit den Merkmalen des Anspruchs 14 gelöst. Die Unteransprüche betreffen vorteilhafte Weiterbildungen der Erfindung.

Ein wesentlicher Vorteil der Erfindung besteht insbesondere darin, dass die Sicherheit bei dem Zugang zu einem Fahrzeug, beispielsweise einem Kraftfahrzeug, wie einem Personenkraftwagen oder dergleichen, verbessert ist. Mit der Sensierung und Auswertung eines einzigen Bewegungsablaufs einer sich außerhalb des Fahrzeugs bewegenden und den tragbaren Bewegungssensor mitführenden Person zum einen durch diesen tragbaren Bewegungssensor und zum anderen durch einen fahrzeuggebundenen Bewegungssensor ist die Sicherheit bei einem Zugangssystem für ein Fahrzeug wesentlich verbessert. Mit der Formulierung "einzigen Bewegungsablaufs" ist gemeint, dass mittels des mindestens einen fahrzeuggebundenen Bewegungssensors und des mindestens einen tragbaren Bewegungssensors derselbe Bewegungsablauf der Person sensierbar ist. Stimmen die sensierten Bewegungsabläufe im Wesentlichen überein, so handelt es sich um dieselbe Person. Anderenfalls handelt es sich um voneinander verschiedene Personen, die sich in einem Umfeld des Fahrzeugs bewegen. Da der fahrzeuggebundene Bewegungssensor und der tragbare Bewegungssensor erfindungsgemäß derart ausgebildet und eingerichtet sind, dass die Sensierung des Bewegungsablaufs der Person mittels des fahrzeuggebundenen Bewegungssensors in Abhängigkeit einer zeitlich vorangehenden Identifikation dieser Person mittels des tragbaren Bewegungssensors erfolgt, ist sichergestellt, dass sich der von dem fahrzeuggebundenen Bewegungssensor sensierte Bewegungsablauf und der von dem tragbaren Bewegungssensor sensierte Bewegungsablauf auf den Bewegungsablauf derselben Person beziehen.

Entsprechend sieht das erfindungsgemäße Verfahren vor, dass die Sensierung des Bewegungsablaufs der Person mittels des fahrzeuggebundenen Bewegungssensors in Abhängigkeit einer zeitlich vorangehenden Identifikation dieser Person mittels des tragbaren Bewegungssensors erfolgt.

Im Unterschied zu der gattungsfernen US 2016/0140539 A1 wird bei der Erfindung nicht der Bewegungsablauf des mobilen Geräts, also des tragbaren Bewegungssensors, sensiert und verglichen, sondern der Bewegungsablauf der Person, die den tragbaren Bewegungssensor trägt, also mit sich führt. Hierdurch ist zum einen die Sensierung des Bewegungsablaufs vereinfacht und eine Vielzahl von voneinander verschiedenen, geeigneten Bewegungssensorarten, insbesondere im Hinblick auf den fahrzeuggebundenen Bewegungssensor, erfindungsgemäß einsetzbar. Beispielsweise ist es so leichter möglich, als fahrzeuggebundenen Bewegungssensor einen bereits für andere Zwecke an dem Fahrzeug verbauten Sensor zu verwenden. Zum anderen ist die Sicherheit des Zugangssystem auch dadurch verbessert, dass eben nicht der Bewegungsablauf eines mobilen Geräts sensiert und ausgewertet wird, sondern der Bewegungsablauf der Person, um deren Zugangsberechtigung es letztlich geht. Neben einer automatischen Entriegelung der mindestens einen Tür des Fahrzeugs ist es auch denkbar, dass eine automatische Verriegelung der mindestens einen Tür des Fahrzeugs erfolgt. Beispielsweise kann dies der Fall sein, wenn mittels des Bewegungsablaufs der Person automatisch erkannt wird, dass die Person aus dem Fahrzeug aussteigt oder sich von dem Fahrzeug entfernt.

Der Begriff "Fahrzeug" ist allgemein zu verstehen und umfasst alle Arten von Land-, See- und Luftfahrzeugen. Auch der Begriff "Zugangskontrolleinheit" ist weit auszulegen und umfasst nicht nur Zugangskontrolleinheiten, mittels denen mindestens eine Tür des Fahrzeugs automatisch verriegelbar oder automatisch entriegelbar ist, sondern auch Zugangskontrolleinheiten, die zusätzlich die Inbetriebnahme des Fahrzeugs kontrollieren. Beispielsweise kann die Kontrolle der Inbetriebnahme des Fahrzeugs in Abhängigkeit von zusätzlichen Bedingungen erfolgen. Der Begriff "Tür" umfasst alle Arten von Türen, Deckeln oder Klappen des Fahrzeugs.

Ferner ist es bei dem erfindungsgemäßen Zugangssystem vorgesehen, dass der fahrzeuggebundene Bewegungssensor und der tragbare Bewegungssensor derart ausgebildet und eingerichtet sind, dass der fahrzeuggebundene Bewegungssensor und der tragbare Bewegungssensor den Bewegungsablauf der Person voneinander unabhängig sensieren. Hierdurch ist die Sicherheit bei dem Zugang zu dem Fahrzeug verbessert.

Entsprechendes gilt für das erfindungsgemäße Verfahren, wonach der fahrzeuggebundene Bewegungssensor und der tragbare Bewegungssensor den Bewegungsablauf der Person voneinander unabhängig sensieren.

Grundsätzlich ist der mindestens eine fahrzeuggebundene Bewegungssensor nach Art, Funktionsweise, Dimensionierung, Material, Anordnung und Anzahl in weiten geeigneten Grenzen frei wählbar. Vorteilhafterweise ist der mindestens eine fahrzeuggebundene Bewegungssensor als eine Kamera, ein Radar, ein Lidar und/oder ein TOF-Sensor ausgebildet. Bei der Kamera kann es sich beispielsweise um eine optische Kamera handeln, die im Wellenlängenbereich von sichtbarem Licht arbeitet. Die Abkürzung "TOF" steht für "time of flight" und meint eine Laufzeitmessung eines von einem Sensor ausgesendeten Signals, dass an einem Objekt reflektiert wird und wieder zu dem Sensor zurückkehrt. Denkbar ist auch, dass der mindestens eine fahrzeuggebundene Bewegungssensor auch für andere Fahrzeugfunktionen, wie beispielsweise Einparkhilfe, Notbremsassistent oder dergleichen, einsetzbar ist. Beispielsweise können mehrere hinsichtlich deren Funktionsweise voneinander verschiedene fahrzeuggebundene Sensoren als fahrzeuggebundene Bewegungssensoren in Kombination miteinander eingesetzt werden. Auch wäre es möglich, dass beispielsweise eine Mehrzahl von fahrzeuggebundenen Sensoren zur Beobachtung jeweils eines Abschnitts einer Umgebung des Fahrzeugs für eine vollständige Beobachtung dieser Umgebung eingesetzt werden.

Auch der mindestens eine tragbare Bewegungssensor ist nach Art, Funktionsweise, Dimensionierung, Material, Anordnung und Anzahl in weiten geeigneten Grenzen frei wählbar. Eine vorteilhafte Weiterbildung des erfindungsgemäßen Zugangssystems sieht vor, dass der mindestens eine tragbare Bewegungssensor als eine UID, ein Smartphone, ein Wearable, ein Dreiachsenmagnetometer, ein Dreiachsenbeschleunigungssensor und/oder ein Dreiachsengyroskop ausgebildet ist. Hierdurch ist der tragbare Bewegungssensor auf besonders einfache Weise realisierbar. Die Abkürzung "UID" steht für "user identification device" und meint ein Benutzeridentifikationsgerät, beispielsweise einen Funkschlüssel. Ferner ist es möglich, den tragbaren Bewegungssensor auch für andere Zwecke zu nutzen. Der mindestens eine tragbare Bewegungssensor weist somit mindestens eine einzige der vorgenannten Ausbildungen oder eine beliebige Anzahl und Kombination dieser Ausbildungen auf.

Eine besonders vorteilhafte Weiterbildung des erfindungsgemäßen Zugangssystems sieht vor, dass mindestens einer des mindestens einen fahrzeuggebundenen Bewegungssensors und/oder des mindestens einen tragbaren Bewegungssensors ausgebildet und eingerichtet sind/ist, um mindestens ein physisches Merkmal der Person zu ermitteln, und dass die Zugangskontrolleinheit in Abhängigkeit des ermittelten physischen Merkmals mittels der Steuerung derart ansteuerbar ist, dass die Zugangskontrolleinheit die mindestens eine Tür verriegelt oder entriegelt. Auf diese Weise ist die Sicherheit des Zugangs zu dem Fahrzeug zusätzlich verbessert. Beispielsweise ist es möglich, dass mittels des fahrzeuggebundenen Bewegungssensors die Körpergröße der den tragbaren Bewegungssensor tragenden Person erfassbar und auswertbar ist. In einer anderen Ausführungsform könnte alternativ oder zusätzlich dazu eine Analyse des Bewegungsablaufs der den tragbaren Bewegungssensor tragenden Person erfolgen, um so beispielsweise anhand eines Gangbilds einer Person eine bestimmte Person oder eine bestimmte Personengruppe identifizieren zu können. Entsprechend könnte ein ungewünschter Zugang zu dem Fahrzeug, also eine ungewünschte Entriegelung der mindestens einen Tür des Fahrzeugs, beispielsweise durch ein Kleinkind oder ein Tier, wirksam verhindert werden. Mittels der Analyse des Bewegungsablaufs der den tragbaren Bewegungssensor tragenden Person könnte beispielsweise auch einer alkoholisierten Person der Zugang zu dem Fahrzeug verweigert werden.

Entsprechend sieht eine vorteilhafte Weiterbildung des erfindungsgemäßen Verfahrens vor, dass mindestens einer des mindestens einen fahrzeuggebundenen Bewegungssensors und/oder des mindestens einen tragbaren Bewegungssensors ausgebildet und eingerichtet sind/ist, um mindestens ein physisches Merkmal der Person zu ermitteln, und dass die Steuerung die Zugangskontrolleinheit in Abhängigkeit des ermittelten physischen Merkmals derart ansteuert, dass die Zugangskontrolleinheit die mindestens eine Tür verriegelt oder entriegelt.

Eine besonders vorteilhafte Weiterbildung des erfindungsgemäßen Verfahrens sieht vor, dass der Vergleich in der Steuerung in Abhängigkeit der im Wesentlichen Gleichzeitigkeit der Sensierung eines Bewegungsablaufs der Person mittels des fahrzeuggebundenen Bewegungssensors und des tragbaren Bewegungssensors ausgelöst wird. Hierdurch ist gewährleistet, dass der Vergleich und damit eine dazu korrelierende automatische Verriegelung oder Entriegelung der mindestens einen Tür des Fahrzeugs lediglich dann erfolgt, wenn derselbe Bewegungsablauf der Person zum einen von dem fahrzeuggebundenen Bewegungssensor und zum anderen von dem tragbaren Bewegungssensor sensiert wird. Die Formulierung "im Wesentlichen Gleichzeitigkeit" meint, dass eine Gleichzeitigkeit in gewissen, vorher festgelegten, Toleranzen erfindungsgemäß ebenfalls als Gleichzeitigkeit zu verstehen ist.

Eine weitere vorteilhafte Weiterbildung des erfindungsgemäßen Verfahrens sieht vor, dass mittels des tragbaren Bewegungssensors eine Position des tragbaren Bewegungssensors relativ zu der Person ermittelt wird, wobei diese Position des tragbaren Bewegungssensors zur Sensierung des Bewegungsablaufs der Person mittels des tragbaren Bewegungssensors und/oder mittels des fahrzeuggebundenen Bewegungssensors ausgewertet wird. Auf diese Weise ist es ohne zusätzliche Sensorik ermöglicht, die Qualität der Sensierung des Bewegungsablaufs der Person mittels des tragbaren Bewegungssensors und/oder mittels des fahrzeuggebundenen Bewegungssensors zu verbessern. Beispielsweise ist es denkbar, dass ein als Kamera ausgebildeter fahrzeuggebundener Bewegungssensor zur Erfassung des Bewegungsablaufs der Person insbesondere einen Bereich erfasst, in dem der tragbare Bewegungssensor an der Person positioniert ist. Möglich ist zum Beispiel, dass die in diesem Bereich erfassten Bilder einer weitergehenderen, also einer detaillierteren, Auswertung zugeführt werden. Die Position des tragbaren Bewegungssensors relativ zu der Person bezieht sich dabei immer auf den von dieser Person getragenen Bewegungssensor.

Grundsätzlich ist die Ermittlung der Position des tragbaren Bewegungssensors relativ zu der Person nach Art und Funktionsweise in weiten geeigneten Grenzen frei wählbar. Eine vorteilhafte Weiterbildung der vorgenannten Ausführungsform des erfindungsgemäßen Verfahrens sieht vor, dass die Position des tragbaren Bewegungssensors relativ zu der Person mittels einer Bestimmung jeweils einer Schrittdauer der Person entlang aller drei Raumachsen ermittelt wird, wobei die Z-Achse im Wesentlichen parallel zu einer Hochachse der Person verläuft und die X-Achse und die Y-Achse zueinander und zu der Hochachse der Person senkrecht verlaufen. Hierdurch ist die Qualität der Ermittlung der Position des tragbaren Bewegungssensors relativ zu der Person auf einfache Weise weiter verbessert. Mit der Schrittdauer ist die Zeitdauer eines von der den tragbaren Bewegungssensor tragenden Person ausgeführten Schrittes gemeint, also die Zeitdauer zwischen dem Abheben eines Fußes dieser Person vom Boden und dem Wiederaufsetzen dieses Fußes dieser Person auf dem Boden. Die Schrittdauer kann beispielsweise durch Integration der auf der entsprechenden Raumachse, also der X-Achse, der Y-Achse oder der Z-Achse, mittels eines als Beschleunigungssensor ausgebildeten tragbaren Bewegungssensor gemessenen Beschleunigungswerte ermittelt werden.

Eine vorteilhafte Weiterbildung der letztgenannten Ausführungsform des erfindungsgemäßen Verfahrens sieht vor, dass bei einer Schrittdauer der Person entlang der Z-Achse von n und gleichzeitig einer Schrittdauer der Person entlang der X-Achse oder der Y-Achse von etwa 0,5*n die Position des tragbaren Bewegungssensors relativ zu der Person als eine Jackentasche oder eine Hemdtasche oder eine Hand der Person identifiziert wird. Auf diese Weise ist eine Ermittlung der Position des tragbaren Bewegungssensors in der Jackentasche, der Hemdtasche oder der Hand der Person auf einfache Art ermöglicht.

Analoges gilt für eine weitere vorteilhafte Weiterbildung des erfindungsgemäßen Verfahrens nach Anspruch 9, wonach bei einer Schrittdauer der Person entlang der Z-Achse von n und gleichzeitig einer Schrittdauer der Person entlang der X-Achse oder der Y-Achse von etwa Null die Position des tragbaren Bewegungssensors relativ zu der Person als ein von der Person mit der Hand getragenes Behältnis oder eine Hand der Person identifiziert wird. Das Behältnis kann beispielsweise als eine Aktentasche, ein Einkaufsbeutel, eine Damenhandtasche oder dergleichen ausgebildet sein.

Ebenfalls gilt dies in analoger Weise für eine andere vorteilhafte Weiterbildung des erfindungsgemäßen Verfahrens nach Anspruch 9, wonach bei einer Schrittdauer der Person entlang der Z-Achse von n und gleichzeitig einer Schrittdauer der Person entlang der X-Achse oder der Y-Achse von etwa n die Position des tragbaren Bewegungssensors relativ zu der Person als eine Hosentasche oder eine Rocktasche der Person identifiziert wird.

Anhand der beigefügten, grob schematischen Zeichnung wird die Erfindung nachfolgend näher erläutert. Dabei zeigt die einzige Figur:

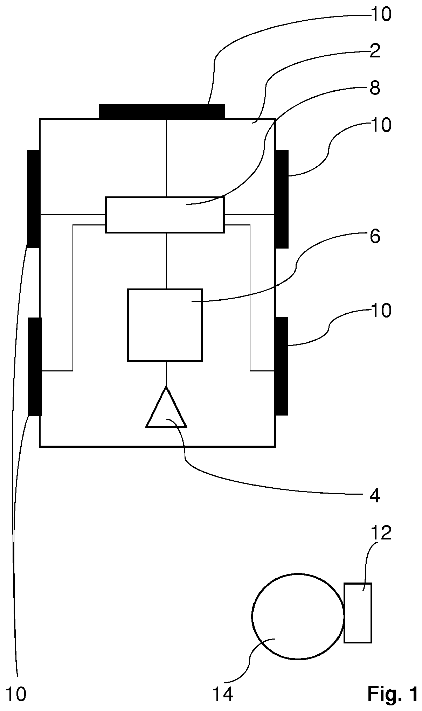

- Fig. 1: ein Ausführungsbeispiel eines erfindungsgemäßen Zugangssystems für ein Fahrzeug.

In Fig. 1 ist ein Ausführungsbeispiel eines erfindungsgemäßen Zugangssystems für ein Fahrzeug 2 exemplarisch dargestellt. Das Fahrzeug 2 ist als ein Personenkraftwagen ausgebildet. Das Zugangssystem umfasst einen als optische Kamera ausgebildeten fahrzeuggebundenen Bewegungssensor 4, wobei die optische Kamera 4 im Wellenlängenbereich von sichtbarem Licht arbeitet. Die Kamera 4 ist an dem Fahrzeug 2 angeordnet und auf dem Fachmann bekannte Weise mit einer Steuerung 6 des Fahrzeugs 2 signalübertragend verbunden. Beispielsweise kann die signalübertragende Verbindung drahtgebunden oder drahtlos ausgebildet sein. Die Steuerung 6 ist ferner mit einer Zugangskontrolleinheit 8 des Fahrzeugs 2 signalübertragend verbunden und dazu ausgebildet und eingerichtet, die Zugangskontrolleinheit 8 derart anzusteuern, dass die Zugangskontrolleinheit 8 alle Türen 10 des Fahrzeugs 2 automatisch verriegelt oder entriegelt. Die Türen 10 sind dabei als Fahrertür, Beifahrertür, zwei Hecktüren und eine Heckklappe ausgebildet.

Ferner weist das Zugangssystem einen tragbaren Bewegungssensor 12 auf, der bei dem vorliegenden Ausführungsbeispiel als ein Dreiachsenbeschleunigungssensor eines Smartphones ausgebildet ist. Das Smartphone und damit der Dreiachsenbeschleunigungssensor 12 des Smartphones ist auf dem Fachmann bekannte Weise, beispielsweise drahtlos, mit der Steuerung 6 des Fahrzeugs 2 in Signalübertragungsverbindung.

Erfindungsgemäß ist es nun vorgesehen, dass der mindestens eine fahrzeuggebundene Bewegungssensor 4 und der mindestens eine tragbare Bewegungssensor 12 derart ausgebildet und eingerichtet sind, dass die Sensierung des Bewegungsablaufs einer Person 14 mittels des mindestens einen fahrzeuggebundenen Bewegungssensors 4 in Abhängigkeit einer zeitlich vorangehenden Identifikation dieser Person 14 mittels des mindestens einen tragbaren Bewegungssensors 12 erfolgt. Auf diese Weise ist sichergestellt, dass sich der von dem mindestens einen fahrzeuggebundenen Bewegungssensor 4 sensierte Bewegungsablauf der Person 14 und der von dem mindestens einen tragbaren Bewegungssensor 12 sensierte Bewegungsablauf der Person 14 auf den Bewegungsablauf derselben Person 14 beziehen.

Die Funktionsweise des erfindungsgemäßen Zugangssystems sowie das erfindungsgemäße Verfahren gemäß dem vorliegenden Ausführungsbeispiel werden anhand der Fig. 1 nachfolgend näher erläutert.

Die Person 14 führt den tragbaren Bewegungssensor 12, also das Smartphone, in der Jackentasche mit sich und bewegt sich auf das Fahrzeug 2 zu. Der tragbare Bewegungssensor 12, nämlich der Dreiachsenbeschleunigungssensor des Smartphones, sensiert den Bewegungsablauf bei der Bewegung der Person 14 in Richtung des Fahrzeugs 2. Gleichzeitig wird derselbe Bewegungsablauf der Person 14 mittels des fahrzeuggebundenen Bewegungssensors 4, nämlich der Kamera des Fahrzeugs 2, sensiert. Beispielsweise kann es vorgesehen sein, dass der tragbare Bewegungssensor 12 bei dessen Annäherung an das Fahrzeug 2 den fahrzeuggebundenen Bewegungssensor 4 aktiviert. Der fahrzeuggebundene Bewegungssensor 4 und der tragbare Bewegungssensor 12 sind bei dem vorliegenden Ausführungsbeispiel derart ausgebildet und eingerichtet, dass der fahrzeuggebundene Bewegungssensor 4 und der tragbare Bewegungssensor 12 den Bewegungsablauf der Person 14 voneinander unabhängig sensieren.

Aufgrund der gleichzeitigen Sensierung des Bewegungsablaufs der Person 14 bei deren Annäherung an das Fahrzeug 2 mittels des fahrzeuggebundenen Bewegungssensors 4 und des tragbaren Bewegungssensors 12 wird der Vergleich des von dem tragbaren Bewegungssensor 12 sensierten Bewegungsablaufs der Person 14 mit dem von dem fahrzeuggebundenen Bewegungssensor 4 sensierten Bewegungsablauf der Person 14 automatisch ausgelöst, also gestartet. Da der mittels des tragbaren Bewegungssensors 12 sensierte Bewegungsablauf der Person 14 im Wesentlichen mit dem mittels des fahrzeuggebundenen Bewegungssensors 4 sensierten Bewegungsablauf der Person 14 bei deren Annäherung an das Fahrzeug 2 übereinstimmt, wird die Zugangskontrolleinheit 8 des Fahrzeugs 2 mittels der Steuerung 6 derart angesteuert, dass die Zugangskontrolleinheit 8 die Türen 10 des Fahrzeugs 2 auf dem Fachmann bekannte Weise automatisch entriegelt. Grundsätzlich ist jedoch auch denkbar, dass der Zugang zu dem Fahrzeug 2 und damit die Entriegelung der Türen 10 des Fahrzeugs 2 von weiteren Bedingungen abhängig ist. Beispielsweise ist es möglich, dass die erfindungsgemäßen Zugangsvoraussetzungen mit weiteren aus dem Stand der Technik bekannten Zugangsvoraussetzungen kombiniert sind. Dies kann auf besonders einfache Weise durch die Ausbildung des tragbaren Bewegungssensors als UID, also als Benutzeridentifikationsgerät, beispielsweise einem Funkschlüssel, realisiert sein.

Die Auswertung der beiden Bewegungsabläufe in der Steuerung 6 erfolgt dabei auf dem Fachmann bekannte Weise. Entsprechend werden die beiden Bewegungsabläufe in der Steuerung 6 zeitlich synchronisiert und in ein gemeinsames Koordinatensystem übertragen.

Hätte der mittels des tragbaren Bewegungssensors 12 sensierte Bewegungsablauf der Person 14 mit dem mittels des fahrzeuggebundenen Bewegungssensors 4 sensierten Bewegungsablauf der Person 14 bei deren Annäherung an das Fahrzeug 2 in einem vorher festgelegten und in der Steuerung 6 abgespeicherten Toleranzbereich nicht übereingestimmt, dann hätte die Steuerung 6 die Zugangskontrolleinheit 8 des Fahrzeugs 2 nicht auf die oben genannte Weise angesteuert.

Die Person 14 steigt in das Fahrzeug 2 ein und fährt davon. Beispielsweise kann hierfür vorgesehen sein, dass die Person 14 zwecks Inbetriebnahme des Fahrzeugs 2 lediglich auf einen Druckknopf oder dergleichen drücken muss. Alternativ dazu kann eine andere Ausführungsform der Erfindung vorsehen, dass eine Inbetriebnahme des Fahrzeugs beispielsweise in Abhängigkeit der Auswertung von Ausgangssignalen einer Innenraumkamera oder dergleichen ermöglicht ist, um eine zusätzliche Sicherheit gegen eine unbefugte Inbetriebnahme zu realisieren.

Verlässt die Person 14 das Fahrzeug 2 wieder, sensiert der tragbare Bewegungssensor 12, nämlich der Dreiachsenbeschleunigungssensor des Smartphones, den Bewegungsablauf bei der Bewegung der Person 14 bei dem Aussteigen aus dem Fahrzeug 2 und/oder bei dem Schließen der Tür 10 des Fahrzeugs 2 und/oder bei dem Entfernen von dem Fahrzeug 2. Gleichzeitig wird derselbe Bewegungsablauf der Person 14 mittels des fahrzeuggebundenen Bewegungssensors 4, nämlich der Kamera des Fahrzeugs 2, sensiert. Aufgrund der gleichzeitigen Sensierung des Bewegungsablaufs der Person 14 bei dem Aussteigen aus dem Fahrzeug 2 und/oder bei dem Schließen der Tür 10 des Fahrzeugs 2 und/oder bei dem Entfernen von dem Fahrzeug 2 mittels des fahrzeuggebundenen Bewegungssensors 4 und des tragbaren Bewegungssensors 12 wird der Vergleich des von dem tragbaren Bewegungssensor 12 sensierten Bewegungsablaufs der Person 14 mit dem von dem fahrzeuggebundenen Bewegungssensor 4 sensierten Bewegungsablauf der Person 14 wieder automatisch ausgelöst, also gestartet. Da der mittels des tragbaren Bewegungssensors 12 sensierte Bewegungsablauf der Person 14 im Wesentlichen mit dem mittels des fahrzeuggebundenen Bewegungssensors 4 sensierten Bewegungsablauf der Person 14 bei dem Aussteigen aus dem Fahrzeug 2 und/oder bei dem Schließen der Tür 10 des Fahrzeugs 2 und/oder bei dem Entfernen von dem Fahrzeug 2 übereinstimmt, wird die Zugangskontrolleinheit 8 des Fahrzeugs 2 mittels der Steuerung 6 derart angesteuert, dass die Zugangskontrolleinheit 8 die Türen 10 des Fahrzeugs 2 auf dem Fachmann bekannte Weise automatisch verriegelt.

Um die Sicherheit bei dem Zugang zu dem Fahrzeug zu verbessern, ist es bei dem beschriebenen Verfahren erfindungsgemäß vorgesehen, dass die Sensierung des Bewegungsablaufs der Person 14 mittels des mindestens einen fahrzeuggebundenen Bewegungssensors 4 in Abhängigkeit einer zeitlich vorangehenden Identifikation dieser Person 14 mittels des mindestens einen tragbaren Bewegungssensors 12 erfolgt. Wie oben bereits erläutert, ist auf diese Weise sichergestellt, dass sich der von dem mindestens einen fahrzeuggebundenen Bewegungssensor 4 sensierte Bewegungsablauf der Person 14 und der von dem mindestens einen tragbaren Bewegungssensor 12 sensierte Bewegungsablauf der Person 14 auf den Bewegungsablauf derselben Person 14 beziehen.

Ferner betrifft die Erfindung ein Computerprogrammprodukt, umfassend Befehle, die bewirken, dass das erfindungsgemäße Zugangssystem gemäß dem vorliegenden Ausführungsbeispiel die Verfahrensschritte des erfindungsgemäßen Verfahrens gemäß dem vorliegenden Ausführungsbeispiel ausführt, sowie ein computerlesbares Medium, auf dem das Computerprogrammprodukt gespeichert ist.

Die Erfindung ist nicht auf das vorliegende Ausführungsbeispiel begrenzt. Beispielsweise ist die Erfindung in vorteilhafter Weise bei einer Vielzahl von voneinander verschiedenen Fahrzeugen, beispielsweise Land-, Wasser- oder Luftfahrzeuge, vorteilhaft einsetzbar. Ferner ist der mindestens eine tragbare Bewegungssensor und der mindestens eine fahrzeuggebundene Bewegungssensor in weiten geeigneten Grenzen frei wählbar. Beispielsweise kann der mindestens eine fahrzeuggebundene Bewegungssensor als eine andere Art von Kamera, ein Radar, ein Lidar und/oder ein TOF-Sensor ausgebildet sein. Auch Kombinationen der vorgenannten Bewegungssensoren sind möglich. Analoges gilt für den mindestens einen tragbaren Bewegungssensor, der beispielsweise auch als eine UID, ein Wearable und/oder ein Dreiachsenmagnetometer, ein Dreiachsenbeschleunigungssensor und/oder ein Dreiachsengyroskop als solches/solcher ausgebildet sein kann. Die diesbezügliche Bewegungssensorik ist dabei nicht auf Beschleunigungssensoren beschränkt.

Auch ist es denkbar, dass mindestens einer des mindestens einen fahrzeuggebundenen Bewegungssensors und/oder des mindestens einen tragbaren Bewegungssensors ausgebildet und eingerichtet sind/ist, um mindestens ein physisches Merkmal der Person zu ermitteln, und dass die Zugangskontrolleinheit in Abhängigkeit des ermittelten physischen Merkmals mittels der Steuerung derart ansteuerbar ist, dass die Zugangskontrolleinheit die mindestens eine Tür verriegelt oder entriegelt. Beispielsweise ist es möglich, dass mittels des mindestens einen fahrzeuggebundenen Bewegungssensors die Körpergröße der den mindestens einen tragbaren Bewegungssensor tragenden Person erfassbar und auswertbar ist. In einer anderen Ausführungsform könnte alternativ oder zusätzlich dazu eine Analyse des Bewegungsablaufs der den tragbaren Bewegungssensor tragenden Person erfolgen, um so beispielsweise anhand eines Gangbilds einer Person eine bestimmte Person oder eine bestimmte Personengruppe identifizieren zu können. Entsprechend könnte ein ungewünschter Zugang zu dem Fahrzeug, also eine ungewünschte Entriegelung der mindestens einen Tür des Fahrzeugs, beispielsweise durch ein Kleinkind oder ein Tier, wirksam verhindert werden. Mittels der Analyse des Bewegungsablaufs der den tragbaren Bewegungssensor tragenden Person könnte beispielsweise auch einer alkoholisierten Person der Zugang zu dem Fahrzeug verwehrt werden. Alternativ oder zusätzlich dazu ist die Ermittlung mindestens eines physischen Merkmals der Person mittels des mindestens einen tragbaren Bewegungssensors denkbar. Die Signalübertragungsverbindung des mindestens einen tragbaren Bewegungssensors und/oder des mindestens einen fahrzeuggebundenen Bewegungssensors kann mittels einer Verschlüsselung oder dergleichen zusätzlich geschützt sein.

Ferner ist es möglich, dass mittels des tragbaren Bewegungssensors eine Position des tragbaren Bewegungssensors relativ zu der Person ermittelt wird, wobei diese Position des tragbaren Bewegungssensors zur Sensierung des Bewegungsablaufs der Person mittels des tragbaren Bewegungssensors und/oder mittels des fahrzeuggebundenen Bewegungssensors ausgewertet wird. Auf diese Weise ist es ohne zusätzliche Sensorik ermöglicht, die Qualität der Sensierung des Bewegungsablaufs der Person mittels des tragbaren Bewegungssensors und/oder mittels des fahrzeuggebundenen Bewegungssensors zu verbessern. Beispielsweise ist es denkbar, dass ein als Kamera ausgebildeter fahrzeuggebundener Bewegungssensor zur Erfassung des Bewegungsablaufs der Person insbesondere einen Bereich erfasst, in dem der tragbare Bewegungssensor an der Person positioniert ist. Möglich ist zum Beispiel, dass die in diesem Bereich erfassten Bilder einer weitergehenderen, also einer detaillierteren, Auswertung zugeführt werden. Grundsätzlich ist dabei die Ermittlung der Position des tragbaren Bewegungssensors relativ zu der Person nach Art und Funktionsweise in weiten geeigneten Grenzen frei wählbar. Beispielsweise ist es möglich, dass die Position des tragbaren Bewegungssensors relativ zu der Person mittels einer Bestimmung jeweils einer Schrittdauer der Person entlang aller drei Raumachsen ermittelt wird, wobei die Z-Achse im Wesentlichen parallel zu einer Hochachse der Person verläuft und die X-Achse und die Y-Achse zueinander und zu der Hochachse der Person senkrecht verlaufen. Hierdurch ist die Qualität der Ermittlung der Position des tragbaren Bewegungssensors relativ zu der Person auf einfache Weise weiter verbessert.

Eine vorteilhafte Weiterbildung der letztgenannten Ausführungsform sieht vor, dass bei einer Schrittdauer der Person entlang der Z-Achse von n und gleichzeitig einer Schrittdauer der Person entlang der X-Achse oder der Y-Achse von etwa 0,5*n die Position des tragbaren Bewegungssensors relativ zu der Person als eine Jackentasche oder eine Hemdtasche oder eine Hand der Person identifiziert wird. Auf diese Weise ist eine Ermittlung der Position des tragbaren Bewegungssensors in der Jackentasche, der Hemdtasche oder der Hand der Person auf einfache Art ermöglicht.

Analoges gilt für eine weitere vorteilhafte Weiterbildung des erfindungsgemäßen Verfahrens nach Anspruch 9, wonach bei einer Schrittdauer der Person entlang der Z-Achse von n und gleichzeitig einer Schrittdauer der Person entlang der X-Achse oder der Y-Achse von etwa Null die Position des tragbaren Bewegungssensors relativ zu der Person als ein von der Person mit der Hand getragenes Behältnis oder eine Hand der Person identifiziert wird.

Ebenfalls gilt dies in analoger Weise für eine andere vorteilhafte Weiterbildung des erfindungsgemäßen Verfahrens nach Anspruch 9, wonach bei einer Schrittdauer der Person entlang der Z-Achse von n und gleichzeitig einer Schrittdauer der Person entlang der X-Achse oder der Y-Achse von etwa n die Position des tragbaren Bewegungssensors relativ zu der Person als eine Hosentasche oder eine Rocktasche der Person identifiziert wird.

### Bezugszeichenliste

- 2: Fahrzeug
- 4: Fahrzeuggebundener Bewegungssensor, als Kamera ausgebildet
- 6: Steuerung des Fahrzeugs 2
- 8: Zugangskontrolleinheit des Fahrzeugs 2
- 10: Tür des Fahrzeugs 2
- 12: Tragbarer Bewegungssensor
- 14: Person, die den tragbaren Bewegungssensor 12 mitführt

## Patentansprüche

1. Zugangssystem für ein Fahrzeug (2), umfassend mindestens einen fahrzeuggebundenen Bewegungssensor (4) und mindestens einen von einer Person (14) tragbaren Bewegungssensor (12) jeweils zur Sensierung eines einzigen Bewegungsablaufs der sich außerhalb des Fahrzeugs (2) bewegenden und den tragbaren Bewegungssensor (12) tragenden Person (14), wobei der fahrzeuggebundene Bewegungssensor (4) und der tragbare Bewegungssensor (12) derart ausgebildet und eingerichtet sind, dass der fahrzeuggebundene Bewegungssensor (4) und der tragbare Bewegungssensor (12) den Bewegungsablauf der Person (14) voneinander unabhängig sensieren, eine Zugangskontrolleinheit (8) des Fahrzeugs (2) zur Verriegelung und/oder Entriegelung von mindestens einer Tür (10) des Fahrzeugs (2) und eine Steuerung (6) zum Vergleich des mittels des fahrzeuggebundenen Bewegungssensors (4) sensierten Bewegungsablaufs der Person (14) mit dem mittels des tragbaren Bewegungssensors (12) sensierten Bewegungsablaufs der Person (14), wobei die Zugangskontrolleinheit (8) in Abhängigkeit des Vergleichs der beiden Bewegungsabläufe mittels der Steuerung (6) derart ansteuerbar ist, dass die Zugangskontrolleinheit (8) die mindestens eine Tür (10) automatisch verriegelt oder automatisch entriegelt,
**dadurch gekennzeichnet,**
**dass** der fahrzeuggebundene Bewegungssensor und der tragbare Bewegungssensor derart ausgebildet und eingerichtet sind, dass die Sensierung des Bewegungsablaufs der Person mittels des fahrzeuggebundenen Bewegungssensors in Abhängigkeit einer zeitlich vorangehenden Identifikation dieser Person mittels des tragbaren Bewegungssensors erfolgt.

2. Zugangssystem nach Anspruch 1,
**dadurch gekennzeichnet,**
**dass** der mindestens eine fahrzeuggebundene Bewegungssensor (4) als eine Kamera, ein Radar, ein Lidar und/oder ein TOF-Sensor ausgebildet ist.

3. Zugangssystem nach Anspruch 1 oder 2,
**dadurch gekennzeichnet,**
**dass** der mindestens eine tragbare Bewegungssensor (12) als eine UID, ein Smartphone, ein Wearable, ein Dreiachsenmagnetometer, ein Dreiachsenbeschleunigungssensor und/oder ein Dreiachsengyroskop ausgebildet ist.

4. Zugangssystem nach einem der Ansprüche 1 bis 3,
**dadurch gekennzeichnet,**
**dass** mindestens einer des mindestens einen fahrzeuggebundenen Bewegungssensors und/oder des mindestens einen tragbaren Bewegungssensors ausgebildet und eingerichtet sind/ist, um mindestens ein physisches Merkmal der Person zu ermitteln, und dass die Zugangskontrolleinheit in Abhängigkeit des ermittelten physischen Merkmals mittels der Steuerung derart ansteuerbar ist, dass die Zugangskontrolleinheit die mindestens eine Tür verriegelt oder entriegelt.

5. Verfahren für ein Zugangssystem eines Fahrzeugs (2), das die folgenden Verfahrensschritte aufweist:
- Sensierung eines Bewegungsablaufs einer einen tragbaren Bewegungssensor (12) tragenden Person (14), die sich außerhalb des Fahrzeugs (2) bewegt, mittels dieses tragbaren Bewegungssensors (12);
- Sensierung dieses Bewegungsablaufs der Person (14) mittels eines fahrzeuggebundenen Bewegungssensors (4), wobei der fahrzeuggebundene Bewegungssensor (4) und der tragbare Bewegungssensor (12) den Bewegungsablauf der Person (14) voneinander unabhängig sensieren;
- Vergleich des mittels des fahrzeuggebundenen Bewegungssensors (4) sensierten Bewegungsablaufs der Person (14) mit dem mittels des tragbaren Bewegungssensors (12) sensierten Bewegungsablaufs der Person (14) in einer Steuerung (6) und
- Ansteuerung einer Zugangskontrolleinheit (8) des Fahrzeugs (2) mittels der Steuerung (6) in Abhängigkeit des Vergleichs, derart, dass die Zugangskontrolleinheit (8) mindestens eine Tür (10) des Fahrzeugs (2) automatisch verriegelt oder automatisch entriegelt,
- **dadurch gekennzeichnet,**
**dass** die Sensierung des Bewegungsablaufs der Person mittels des fahrzeuggebundenen Bewegungssensors in Abhängigkeit einer zeitlich vorangehenden Identifikation dieser Person mittels des tragbaren Bewegungssensors erfolgt.

6. Verfahren nach Anspruch 5,
**dadurch gekennzeichnet,**
**dass** der Vergleich in der Steuerung (6) in Abhängigkeit der im Wesentlichen Gleichzeitigkeit der Sensierung eines Bewegungsablaufs der Person (14) mittels des fahrzeuggebundenen Bewegungssensors (4) und des tragbaren Bewegungssensors (12) ausgelöst wird.

7. Verfahren nach Anspruch 5 oder 6,
**dadurch gekennzeichnet,**
**dass** mindestens einer des mindestens einen fahrzeuggebundenen Bewegungssensors und/oder des mindestens einen tragbaren Bewegungssensors ausgebildet und eingerichtet sind/ist, um mindestens ein physisches Merkmal der Person zu ermitteln, und dass die Steuerung die Zugangskontrolleinheit in Abhängigkeit des ermittelten physischen Merkmals derart ansteuert, dass die Zugangskontrolleinheit die mindestens eine Tür verriegelt oder entriegelt.

8. Verfahren nach einem der Ansprüche 5 bis 7,
**dadurch gekennzeichnet,**
**dass** mittels des tragbaren Bewegungssensors eine Position des tragbaren Bewegungssensors relativ zu der Person ermittelt wird, wobei diese Position des tragbaren Bewegungssensors zur Sensierung des Bewegungsablaufs der Person mittels des tragbaren Bewegungssensors und/oder mittels des fahrzeuggebundenen Bewegungssensors ausgewertet wird.

9. Verfahren nach Anspruch 8,
**dadurch gekennzeichnet,**
**dass** die Position des tragbaren Bewegungssensors relativ zu der Person mittels einer Bestimmung jeweils einer Schrittdauer der Person entlang aller drei Raumachsen ermittelt wird, wobei die Z-Achse im Wesentlichen parallel zu einer Hochachse der Person verläuft und die X-Achse und die Y-Achse zueinander und zu der Hochachse der Person senkrecht verlaufen.

10. Verfahren nach Anspruch 9,
**dadurch gekennzeichnet,**
**dass** bei einer Schrittdauer der Person entlang der Z-Achse von n und gleichzeitig einer Schrittdauer der Person entlang der X-Achse oder der Y-Achse von etwa 0,5*n die Position des tragbaren Bewegungssensors relativ zu der Person als eine Jackentasche oder eine Hemdtasche oder eine Hand der Person identifiziert wird.

11. Verfahren nach Anspruch 9,
**dadurch gekennzeichnet,**
**dass** bei einer Schrittdauer der Person entlang der Z-Achse von n und gleichzeitig einer Schrittdauer der Person entlang der X-Achse oder der Y-Achse von etwa Null die Position des tragbaren Bewegungssensors relativ zu der Person als ein von der Person mit der Hand getragenes Behältnis oder eine Hand der Person identifiziert wird.

12. Verfahren nach Anspruch 9,
**dadurch gekennzeichnet,**
**dass** bei einer Schrittdauer der Person entlang der Z-Achse von n und gleichzeitig einer Schrittdauer der Person entlang der X-Achse oder der Y-Achse von etwa n die Position des tragbaren Bewegungssensors relativ zu der Person als eine Hosentasche oder eine Rocktasche der Person identifiziert wird.

13. Computerprogrammprodukt, umfassend Befehle, die bewirken, dass das Zugangssystem nach einem der Ansprüche 1 bis 4 die Verfahrensschritte des Verfahrens nach einem der Ansprüche 5 bis 12 ausführt.

14. Computerlesbares Medium, auf dem das Computerprogrammprodukt nach Anspruch 13 gespeichert ist.

## Claims

1. Access system for a vehicle (2), comprising at least one vehicle-bound motion sensor (4) and at least one motion sensor (12) wearable by a person (14), each for sensing a single motion sequence of the person (14) moving outside the vehicle (2) and wearing the wearable motion sensor (12), wherein the vehicle-bound motion sensor (4) and the wearable motion sensor (12) are designed and set up in such a way that the vehicle-bound motion sensor (4) and the wearable motion sensor (12) sense the motion sequence of the person (14) independently of each other, an access control unit (8) of the vehicle (2) for locking and/or unlocking at least one door (10) of the vehicle (2) and a controller (6) for comparing the motion sequence of the person (14) sensed by means of the vehicle-bound motion sensor (4) with the motion sequence of the person (14) sensed by means of the wearable motion sensor (12), wherein the access control unit (8) can be actuated by means of the controller (6) on the basis of the comparison of the two motion sequences in such a way that the access control unit (8) automatically locks or automatically unlocks the at least one door (10),
**characterised in that**
the vehicle-bound motion sensor and the wearable motion sensor are designed and set up in such a way that the sensing of the motion sequence of the person by means of the vehicle-bound motion sensor takes place depending on a temporally prior identification of this person by means of the wearable motion sensor.

2. Access system according to claim 1,
**characterised in that**
the at least one vehicle-bound motion sensor (4) is designed as a camera, a radar, a lidar and/or a TOF sensor.

3. Access system according to claim 1 or 2,
**characterised in that**
the at least one wearable motion sensor (12) is designed as a UID, a smartphone, a wearable, a three-axis magnetometer, a three-axis acceleration sensor and/or a three-axis gyroscope.

4. Access system according to any one of claims 1 to 3,
**characterised in that**
at least one of the at least one vehicle-bound motion sensor and/or the at least one wearable motion sensor is/are designed and set up to determine at least one physical characteristic of the person, and **in that** the access control unit can be actuated by means of the controller depending on the determined physical characteristic in such a way that the access control unit locks or unlocks the at least one door.

5. Method for an access system of a vehicle (2), comprising the following method steps:
- Sensing of a motion sequence of a person (14) wearing a wearable motion sensor (12) moving outside the vehicle (2) by means of this wearable motion sensor (12);
- Sensing of this motion sequence of the person (14) by means of a vehicle-bound motion sensor (4), wherein the vehicle-bound motion sensor (4) and the wearable motion sensor (12) sense the motion sequence of the person (14) independently of one another;
- Comparison of the motion sequence of the person (14) sensed by means of the vehicle-bound motion sensor (4) with the motion sequence of the person (14) sensed by means of the wearable motion sensor (12) in a controller (6), and
- Actuation of an access control unit (8) of the vehicle (2) by means of the controller (6) on the basis of the comparison, such that the access control unit (8) automatically locks or automatically unlocks at least one door (10) of the vehicle (2),
- **characterised in that**
the sensing of the person's motion sequence by means of the vehicle-bound motion sensor takes place depending on a temporally prior identification of this person by means of the wearable motion sensor.

6. Method according to claim 5,
**characterised in that**
the comparison in the controller (6) is triggered depending on the essentially simultaneous sensing of a motion sequence of the person (14) by means of the vehicle-bound motion sensor (4) and the wearable motion sensor (12).

7. Method according to claim 5 or 6,
**characterised in that**
at least one of the at least one vehicle-bound motion sensor and/or the at least one wearable motion sensor is/are designed and set up to determine at least one physical characteristic of the person, and **in that** the controller actuates the access control unit depending on the determined physical characteristic in such a way that the access control unit locks or unlocks the at least one door.

8. Method according to any one of claims 5 to 7,
**characterised in that**
a position of the wearable motion sensor relative to the person is determined by means of the wearable motion sensor, wherein this position of the wearable motion sensor is evaluated for sensing the motion sequence of the person by means of the wearable motion sensor and/or by means of the vehicle-bound motion sensor.

9. Method according to claim 8,
**characterised in that**
the position of the wearable motion sensor relative to the person is determined by means of a determination of a step duration of the person along all three spatial axes, wherein the Z-axis runs essentially parallel to a vertical axis of the person and the X-axis and the Y-axis run perpendicular to each other and to the vertical axis of the person.

10. Method according to claim 9,
**characterised in that**
with a step duration of the person along the Z-axis of n and simultaneously a step duration of the person along the X-axis or the Y-axis of about 0.5*n, the position of the wearable motion sensor relative to the person is identified as a jacket pocket or a shirt pocket or a hand of the person.

11. Method according to claim 9,
**characterised in that**
with a step duration of the person along the Z-axis of n and simultaneously a step duration of the person along the X-axis or the Y-axis of approximately zero, the position of the wearable motion sensor relative to the person is identified as a container carried by the person by hand or a hand of the person.

12. Method according to claim 9,
**characterised in that**
with a step duration of the person along the Z-axis of n and simultaneously a step duration of the person along the X-axis or the Y-axis of approximately n, the position of the wearable motion sensor relative to the person is identified as a trouser pocket or a skirt pocket of the person.

13. Computer program product comprising instructions that cause the access system according to any one of claims 1 to 4 to perform the method steps of the method according to any one of claims 5 to 12.

14. Computer-readable medium on which the computer program product according to claim 13 is stored.

## Revendications

1. Système d'accès pour un véhicule (2) comprenant au moins un capteur de mouvement (4) lié au véhicule et au moins un capteur de mouvement (12) portable par une personne (14), respectivement pour la détection d'une seule séquence de mouvement de la personne (14) se déplaçant à l'extérieur du véhicule (2) et portant le capteur de mouvement portable (12), le capteur de mouvement (4) lié au véhicule et le capteur de mouvement portable (12) étant conçus et agencés de telle sorte que le capteur de mouvement (4) lié au véhicule et le capteur de mouvement portable (12) détectent la séquence de mouvement de la personne (14) indépendamment l'un de l'autre, une unité de contrôle d'accès (8) du véhicule (2) pour verrouiller et/ou déverrouiller au moins une porte (10) du véhicule (2) et une commande (6) pour comparer la séquence de mouvement de la personne (14) détectée au moyen du capteur de mouvement (4) lié au véhicule avec la séquence de mouvement de la personne (14) détectée au moyen du capteur de mouvement portable (12), l'unité de contrôle d'accès (8) pouvant être commandée au moyen de la commande (6) en fonction de la comparaison des deux séquences de mouvement de telle sorte que l'unité de contrôle d'accès (8) verrouille automatiquement ou déverrouille automatiquement au moins une porte (10),
**caractérisé en ce que**
le capteur de mouvement lié au véhicule et le capteur de mouvement portable sont réalisés et agencés de telle sorte que la détection de la séquence de mouvement de la personne au moyen du capteur de mouvement lié au véhicule s'effectue en fonction d'une identification antérieure dans le temps de cette personne au moyen du capteur de mouvement portable.

2. Système d'accès selon la revendication 1
**caractérisé en ce que**
au moins un capteur de mouvement (4) lié au véhicule est conçu sous la forme d'une caméra, d'un radar, d'un lidar et/ou d'un capteur TOF.

3. Système d'accès selon la revendication 1 ou 2
**caractérisé en ce que**
au moins un capteur de mouvement portable (12) est conçu sous la forme d'un UID, d'un smartphone, d'un dispositif connecté, d'un magnétomètre triaxial, d'un capteur d'accélération triaxial et/ou d'un gyroscope triaxial.

4. Système d'accès selon l'une des revendications 1 à 3
**caractérisé en ce que**
au moins un capteur de mouvement lié au véhicule et/ou au moins un capteur de mouvement portable est réalisé et agencé de manière à déterminer au moins une caractéristique physique de la personne et **en ce que** l'unité de contrôle d'accès peut être commandée au moyen de la commande en fonction de la caractéristique physique déterminée de telle sorte que l'unité de contrôle d'accès verrouille ou déverrouille au moins une porte.

5. Procédé pour un système d'accès d'un véhicule (2) qui comporte les étapes de procédé suivantes :
- Détection d'une séquence de mouvement d'une personne (14) portant un capteur de mouvement portable (12) et se déplaçant à l'extérieur du véhicule (2) au moyen de ce capteur de mouvement portable (12) ;
- Détection de cette séquence de mouvement de la personne (14) au moyen d'un capteur de mouvement (4) lié au véhicule, le capteur de mouvement (4) lié au véhicule et le capteur de mouvement portable (12) détectant la séquence de mouvement de la personne (14) indépendamment l'un de l'autre ;
- Comparaison de la séquence de mouvement de la personne (14) détectée par le capteur de mouvement lié au véhicule (4) avec la séquence de mouvement de la personne (14) détectée par le capteur de mouvement portable (12) dans une commande (6) et
- Commande d'une unité de contrôle d'accès (8) du véhicule (2) au moyen de la commande (6) en fonction de la comparaison, de telle sorte que l'unité de contrôle d'accès (8) verrouille automatiquement ou déverrouille automatiquement au moins une porte (10) du véhicule (2),
- **caractérisé en ce que**
la détection de la séquence de mouvement de la personne au moyen du capteur de mouvement lié au véhicule s'effectue en fonction d'une identification antérieure dans le temps de cette personne au moyen du capteur de mouvement portable.

6. Procédé selon la revendication 5
**caractérisé en ce que**
la comparaison est déclenchée dans la commande (6) en fonction de la simultanéité essentielle de la détection d'une séquence de mouvement de la personne (14) au moyen du capteur de mouvement (4) lié au véhicule et du capteur de mouvement (12) portable.

7. Procédé selon la revendication 5 ou 6
**caractérisé en ce que**
au moins un capteur de mouvement lié au véhicule et/ou au moins un capteur de mouvement portable est conçu et agencé de manière à déterminer au moins une caractéristique physique de la personne et **en ce que** la commande de l'unité de contrôle d'accès en fonction de la caractéristique physique est déterminée de telle sorte que l'unité de contrôle d'accès verrouille ou déverrouille au moins une porte.

8. Procédé selon l'une des revendications 5 à 7
**caractérisé en ce que**
une position du capteur de mouvement portable par rapport à la personne est déterminée au moyen du capteur de mouvement portable, cette position du capteur de mouvement portable étant évaluée pour la détection de la séquence du mouvement de la personne au moyen du capteur de mouvement portable et/ou au moyen du capteur de mouvement lié au véhicule.

9. Procédé selon la revendication 8
**caractérisé en ce que**
la position du capteur de mouvement portable par rapport à la personne est déterminée au moyen d'une détermination respectivement d'une durée de pas de la personne le long de tous les trois axes spatiaux, l'axe Z s'étendant essentiellement parallèlement à un axe vertical de la personne et l'axe X et l'axe Y s'étendant perpendiculairement entre eux et à l'axe vertical de la personne.

10. Procédé selon la revendication 9
**caractérisé en ce que**
pour une durée de pas de la personne le long de l'axe Z de n et, simultanément, une durée de pas de la personne le long de l'axe X ou de l'axe Y d'environ 0,5*n, la position du capteur de mouvement portable par rapport à la personne est identifiée comme étant une poche de veste ou une poche de chemise ou une main de la personne.

11. Procédé selon la revendication 9
**caractérisé en ce que**
pour une durée de pas de la personne le long de l'axe Z de n et, simultanément, une durée de pas de la personne le long de l'axe X ou de l'axe Y d'environ zéro, la position du capteur de mouvement portable par rapport à la personne est identifiée comme un récipient porté à la main par la personne ou une main de la personne.

12. Procédé selon la revendication 9
**caractérisé en ce que**
pour une durée de pas de la personne le long de l'axe Z de n et, simultanément, une durée de pas de la personne le long de l'axe X ou de l'axe Y d'environ n, la position du capteur de mouvement portable par rapport à la personne est identifiée comme une poche de pantalon ou une poche de jupe de la personne.

13. Programme informatique comprenant des instructions pour faire en sorte que le système d'accès selon l'une des revendications 1 à 4 exécute les étapes du procédé selon l'une des revendications 5 à 12.

14. Support lisible par ordinateur sur lequel est stocké le programme informatique selon la revendication 13.
